# EUROPÄISCHE PATENTANMELDUNG

(11) **EP 1 041 164 A1**
(43) Veröffentlichungstag der Anmeldung: **04.10.2000**
(21) Anmeldenummer: 99106415.5
(22) Anmeldetag: 27.03.1999
(51) Int. Cl.: C22C 11/06

(54) **Bleilegierung für die Herstellung von Bleigittern für Akkumulatoren**

(71) Anmelder: Accumulatorenwerke Hoppecke Carl Zoellner & Sohn GmbH & Co. KG, 59929 Brilon (DE)
(72) Erfinder: Cattaneo, Eduardo, Dr., 59929 Brilon (DE)
(74) Vertreter: Stenger, Watzke & Ring Patentanwälte

(57) **Zusammenfassung**

Um eine Bleilegierung bereitzustellen, die die Anwendung kontinuierlicher Herstellungsverfahren begünstigt, zu verbesserten Produkteigenschaften führt und wirtschaftlich anwendbar ist, wird mit der Erfindung vorgeschlagen eine Bleilegierung für die Herstellung von Bleigittern für Akkumulatoren, enthaltend neben den Basisstoffen Blei, Zinn und Calzium einen Beschleuniger für die Aushärtung beim Gießen, welcher zusätzlich die Endhärte der Legierung erhöht.

## Beschreibung

Die vorliegende Erfindung betrifft eine Bleilegierung für die Herstellung von Bleigittern für Akkumulatoren. Weiterhin betrifft sie ein neuartiges Bleigitter und einen mit diesem aufgebauten Akkumulator.

Bleilegierungen für die Herstellung von Bleigittern von Akkumulatoren sind in großer Zahl und in verschiedenen Variationen bekannt. Bewährte Legierungen enthalten in der Regel Blei (Pb), Calzium (Ca) und Zinn (Sn) sowie weitere Zusatzstoffe. Zusatzstoffe können beispielsweise sein Aluminium (Al) oder auch Silber (Ag). Letzteres wurde insbesondere in DE 2 758 940 oder EP 0 506 323 in Größenordnungen von 0,015 bis 0,1 %, jeweils bezogen auf das Legierungs-Gewicht, vorgeschlagen, vor allem um die Wartungsfreiheit der Batterien zu verbessern, indem Ag die Korrosion der positiven Gitter reduziert.

Auch Herstellungsverfahren zur Herstellung von Bleigittern in kontinuierlicher Fertigung sind an sich bekannt und werden in großem Umfang intensiv eingesetzt. Es ist bekannt, Formteile durch kontinuierliche Verfahren herzustellen, wobei eine Ausbringdüse (Gießdüse) und die Form relativ zueinander bewegt werden, so daß die Form mittels der Ausbringdüse mit flüssigem Material gefüllt wird, das in dem Formbereich, der sich durch die Relativbewegung von der Ausbringdüse weg entfernt, zur Erstarrung kommt und gleichlaufend damit wieder frei stehender Formenhohlraum in den Bereich der Ausbringdüse zur kontinuierlichen Füllung bewegt wird. Die Anwendung dieser Technologie auf das Gießen von Gitterelementen aus Blei für die Herstellung von Bleielektroden bei der Akkumulatorenproduktion ist geläufig. Aufgrund des fließfähigen Zustandes neigt das über die Ausbringdüse in die Negativform eingebrachte Material dazu, sich schnell in der Negativform auszubreiten und insbesondere auch die Form gegenüber der Ausbringdüse voreilend zu füllen, so daß beim weiteren Formfüllprozeß infolge der Relativbewegung flüssiges Material schon erstarrtem angefügt wird, wobei es hier zur Ausbildung einer nicht material- und damit nicht kraftschlüssigen Trennstelle im Formteil kommt. Mit derartigen Mängeln behaftete Formteile sind für die weitere Verwendung nicht zu gebrauchen.

Es ist im Stand der Technik bekannt, zur Vermeidung unkontrolliert voreilenden Ausfliessens Dichtleisten im Bereich der Ausbringdüse anzuordnen, welche im wesentlichen in die Negativform hineinragen und ein unkontrolliert voreilendes Füllen mit Fließmaterial verhindern. Es kommt jedoch zwischen der Form und den Dichtleisten zu einer Reibpaarung, die zu hoher Materialbeanspruchung führt.

Es wurde vorgeschlagen, dem fließfähigen Material Richtungsänderungen durch Kröpfungen des Formteils aufzuzwingen, um somit ein Vorlaufen zu vermeiden.

Es sind auch Verfahren bekannt, wo im Düsenbereich Stickstoff (N₂) aufgeblasen wird, so daß keine Oxidhautbildung stattfindet. Dennoch hat sich der Bleivorfluß und sich dadurch ergebende Kaltverschweißung als äußerst nachteilig erwiesen. Darüber hinaus ergibt sich bei der Pastierung mit der aktiven Masse entlang der in den gegossenen Gittern gebildeten Korngrenzen, in denen gerichtete Kristalle stehen, durch die Säure eine Korngrenzenkorrosion, mit der Folge, daß das Gitter bricht. Es kann somit weder seine elektrische Leitungsfunktion noch die Trägerfunktion für die aktiven Massen erfüllen.

Man hat zwar versucht, durch sogenanntes Kaltwalzen die Korngrenzen zu brechen, so daß dort nicht mehr gerichtete Kristalle in der Oberfläche befindlich sind, jedoch läßt sich das Gefüge nicht entspannen und weist eine hohe innere Energie auf, so daß es im hohen Grad zu einer sogenannten Volumenkorrosion kommt. Es ist daher eine Mindestdicke erforderlich, die in den Bereich von 0,8 mm bis 1 mm geht.

Zur Vermeidung der Nachteile aufgrund von Kaltverschweißung und Korngrenzenkorrosion wurde auch schon vorgeschlagen, Gitter aus Streckmetallen zu bilden. Diese haben jedoch keine geschlossenen Rahmen und lassen sich nicht konturieren. Darüber hinaus ergibt sich ein erheblicher Materialausstoß bei der Plattenabtrennung. Insgesamt lassen sich mit dem aus dem Stand der Technik bekannten Verfahren dünnere Gitter nicht ausbilden, ergeben sich hohe Ausschußraten durch Kaltverschweißung und hinsichtlich der geometrischen Ausbildung der Gitter und der einzelnen Gitterbereiche sind erheblich enge Grenzen gesetzt. Zur Verbessung dieser Probleme wurde auch ein Verfahren zur Herstellung von Bleigittern zur Bildung von Bleielektroden für die Akkumulatorenherstellung in kontinuierlicher Fertigung vorgeschlagen, wobei durch Gießen eines aushärtbaren bleihaltigen Materials Gitterrohlinge ausgebildet und anschließend durch Walzen unter Wärmezufuhr bei einer Temperatur unterhalb des Schmelzpunktes ausgeformt werden.

Es hat sich jedoch gezeigt, daß auch diese verfahrensseitigen Verbesserungen noch nicht allen Anforderungen genügen. Dies ergibt sich aus zum Teil widersprüchlichen Anforderungen an Legierung, Verarbeitbarkeit und Endprodukt. Anforderungen sind beispielsweise :
a) Gute Gießbarkeit, d.h. robuste Gießbedingungen,
b) Härte und mechanische Festigkeit für Handling des Formlings und Pastierung,
c) Korrosionsbeständigkeit, insbesondere gegen Korngrenzenkorrosion,
d) Kriechfestigkeit bei hohem Temperaturen,
e) Tiefentladefestigkeit, d.h. keine Gitter-Masse Passivschichtbildung,
f) Keine Herabsetzung der Wasserstoffüberspannung der negativen Platten durch Metallabscheidung, also kein erhöhter Wasserverbrauch durch Elektrolyse.

Tiefentladefestigkeit ist die Wiederaufladbarkeit nach einer Tiefentladung. Die kontinuierliche Fertigung erfordert natürlich eine Legierung, die eine schnelle Produktion bei guten Produkteigenschaften unterstützt. Darüber hinaus ist Ag ein sehr teurer Werkstoff und die Silberlegierungen sind bezüglich der Tiefentladefestigkeit unzureichend und stellen wegen der Ausscheidungsproblematik des Ag ein Problem beim Recycling dar.

Ausgehend vom beschriebenen Stand der Technik liegt der vorliegenden Erfindung die **Aufgabe** zugrunde, eine Bleilegierung bereitzustellen, die die Anwendung kontinuierlicher Herstellungsverfahren begünstigt, zu verbesserten Produkteigenschaften führt und wirtschaftlich anwendbar ist.

Zur technischen **Lösung** dieser Aufgabe wird mit der Erfindung vorgeschlagen eine Bleilegierung für die Herstellung von Bleigittern für Akkumulatoren, enthaltend neben den Basisstoffen Blei, Zinn und Calzium einen Beschleuniger für die Aushärtung beim Gießen, welcher zusätzlich die Endhärte der Legierung erhöht.

Mit der erfindungsgemäßen Legierung ergeben sich nunmehr eine erhebliche Zahl von Vorteilen. Zum einen wird durch den Beschleuniger bei hoher Gießgeschwindigkeit ein hartes Gitter mit guten Produkteigenschaften erhalten. Weiterhin ist die Legierung wirtschaftlich und in Handling sowie im Recycling einfach und umweltfreundlich. Durch den Beschleuniger ergibt sich zugleich eine Hemmung des Überalterungsprozesses, wodurch die mechanische Festigkeit erreicht und erhalten wird. Bei Überalterung würde die Festigkeit nachlassen. Die Legierung bewirkt eine hohe Kriechfestigkeit, ist also eine Hochtemperaturlegierung, und eine Beständigkeit gegen intergranulare Korrosion, erfüllt also alle oben genannten Anforderungen oder verbessert diese zumindest.

Eine Grundlegierung für die Verwendung in Bleiakkumulator besteht aus den folgenden Prozentanteilen bezogen auf das Gewicht der Legierung: Ca 0,02 - 0,06% ; Sn 0,3-2,0 % ; Ag 0,005 - 0,02 % sowie Pb.

Es wird vorgeschlagen, daß der Beschleuniger in einer Menge von ≤ 0,09 % bezogen auf das Gewicht der Legierung enthalten ist. Der Beschleuniger kann ein Einzelelement oder eine Stoffgruppe sein, welche im Löslichkeitsbereich bei Zimmertemperatur des Calzium liegt. Es läßt sich somit eine Legierungsgruppe CAₓBES_{y} bilden, wobei BES der Beschleuniger oder die Beschleunigergruppe ist und x bzw. y die Mengen sind.

Die Bleilegierung kann einen minimierten Gehalt an Silber von ≤ 0,015 % enthalten. Dadurch bleiben die Kosten minimal, die Recyclingfähigkeit uneingeschränkt und die negative Auswirkung von Ag, zum Beispiel auf die Tiefentladefestigkeit begrenzt bzw. neutralisiert. Durch die Minimierung des Ag-Gehaltes ist eine bessere Tiefentladungsfestigkeit gegeben als bei der im Stand der Technik für optimal angenommenen Zusammensetzung.

Der Beschleuniger kann wenigstens ein Element aus der Gruppe Sr, Li, Mg umfassen. Insbesondere Li verbessert und erhöht die Zugfestigkeit und auch die Kriechfestigkeit bei hohen Temperaturen. Die Bleilegierung enthält vorzugsweise Li in einer Menge von 0,0015 % bis 0,1 %. Alle %-Angaben beziehen sich auf das Gewicht der Legierung. Insbesondere wird vorteilhaft vorgeschlagen, daß die Bleilegierung Li in einer Menge von ≤ 0,04 % enthält.

Die Bleilegierung enthält gemäß einem weiteren Vorschlag der Erfindung Sr in einer Menge von 0,005 % bis 0,3 %, vorzugsweise ≤ 0,03 %. Ebenso wird vorgeschlagen, daß diese Mg in einer Menge von 0,005 % bis 0,1 %, vorzugsweise ≤ 0,02 % enthält. Schließlich kann von Vorteil sein, wenn diese Ba in einer Menge von 0,005 % bis 0,05 %, vorzugsweise ≤ 0,03 % enthält. Eine weitere Neuerung besteht darin, daß die Bleilegierung Bismuth in einer Menge von ≥ 0,025 % enthält.

Ein interessanter Aspekt der Erfindung ist die Möglichkeit der Modularisierung der Legierung mit den entsprechenden Vorteilen für Lagerhaltung, Verfahrenstechnik und dergleichen. Die Modularisierung ist durch die Nutzung der Löslichkeitsgrenze bei Zimmertemperatur gegeben, so daß Ca mit entsprechenden Beimengungen die eine Basiskomponente, Blei eine weitere Basiskomponente und Sonderzusätze je nach Anwendungsfall ergänzende Zusatzkomponenten bilden.

Mit der erfindungsgemäßen Legierung läßt sich ein Bleigitter für Akkumulatoren in einem kontinuierlichen Gießverfahren einfach und mit sehr guten Produkteigenschaften herstellen, und zwar für positive wie auch negative Platten. Die Legierung ist auch für Anwendungen im Fallguß-Verfahren vorteilhaft einsetzbar. Vorzugweise ist dieses nach dem Gießen durch Walzen bearbeitet. Insbesondere unter Wärmezufuhr im Bereich unterhalb des Schmelzpunktes wird ein Walzverfahren zur Ausformung eines Gitterohlings angewandt. Dadurch läßt sich weiterhin das Kristallgefüge unter gleichzeitiger Entspannnung und vollkommener Rekristallisation, also Abbau der inneren Energie, glätten, darüber hinaus lassen sich Kaltverschweißungen ausheilen und lassen sich in unterschiedlichen Gitterbereichen unterschiedliche Formen und Dicken ausbilden. Die Legierung umfaßt Blei, Aluminium, Kalzium, Zinn, zeitweilig auch Silber. Der Schmelzpunkt liegt also bei etwa 300° Celsius. Ein vorzugsweiser Arbeitsbereich des Verfahrens liegt oberhalb der Rekristallisationstemperatur. Nach dem Walzvorgang liegt somit ein vollkommen rekristallisiertes Gefüge vor, welches bei späterer Wärmebeeinflussung sich nicht mehr verändern wird.

Schließlich wird mit der Erfindung ein neuartiger Akkumulator mit in einen elektrolytbefüllbaren Behälter eingesetzten positiven und negativen Elektroden bereitgestellt, welche aus mit aktiven Massen beschichteten neuartigen Bleigittern aus einer Bleilegierung nach der Erfindung gebildet sind. Insgesamt wird mit der Erfindung eine sehr einfach anwendbare, äußerst wirtschaftliche und sehr effektive Legierung zur Herstellung von Bleigittern für die Elektrodenfertigung bereitgestellt.

## Patentansprüche

1. Bleilegierung für die Herstellung von Bleigittern für Akkumulatoren, enthaltend neben den Basisstoffen Blei, Zinn und Calzium einen Beschleuniger für die Aushärtung beim Gießen, welcher zusätzlich die Endhärte der Legierung erhöht.

2. Bleilegierung nach Anspruch 1, dadurch gekennzeichnet, daß der Beschleuniger in einer Menge von ≤ 0,09 % bezogen auf das Gewicht der Legierung enthalten ist.

3. Bleilegierung nach einem der vorhergehenden Ansprüche, dadurch gekennzeichnet, daß der Beschleuniger ein Einzelelement oder eine Stoffgruppe ist, welche im Löslichkeitsbereich bei Zimmertemperatur des Kalzium liegen.

4. Bleilegierung nach einem der vorhergehenden Ansprüche, dadurch gekennzeichnet, daß diese einen minimierten Gehalt an Silber von ≤ 0,015 % enthält.

5. Bleilegierung nach einem der vorhergehenden Ansprüche, dadurch gekennzeichnet, daß der Beschleuniger wenigstens ein Element aus der Gruppe Sr, Li, Mg umfaßt.

6. Bleilegierung nach einem der vorhergehenden Ansprüche, dadurch gekennzeichnet, daß diese Li in einer Menge von 0,0015 % bis 0,1 % enthält.

7. Bleilegierung nach Anspruch 6, dadurch gekennzeichnet, daß diese Li in einer Menge von ≤ 0,04 % enthält.

8. Bleilegierung nach einem der vorhergehenden Ansprüche, dadurch gekennzeichnet, daß diese Sr in einer Menge von 0,005 % bis 0,3 % enthält.

9. Bleilegierung nach einem der vorhergehenden Ansprüche, dadurch gekennzeichnet, daß diese Mg in einer Menge von 0,005 % bis 0,1 % enthält.

10. Bleilegierung nach einem der vorhergehenden Ansprüche, dadurch gekennzeichnet, daß diese Ba in einer Menge von 0,005 % bis 0,05 % enthält.

11. Bleilegierung nach einem der vorhergehenden Ansprüche, dadurch gekennzeichnet, daß diese Bismuth in einer Menge von ≥ 0,025 % enthält.

12. Bleigitter für Akkumulatoren, gebildet aus einer Bleilegierung nach wenigstens einem der Ansprüche 1 bis 11, hergestellt in einem kontinuierlichen Gießverfahren.

13. Bleigitter nach Anspruch 12, dadurch gekennzeichnet, daß dieses nach dem Gießen durch Walzen bearbeitet ist.

14. Bleigitter nach Anspruch 13, dadurch gekennzeichnet, daß dieses nach dem Gießen durch Walzen unter Wärmezufuhr im Temperatur-Bereich unterhalb des Schmelzpunktes bearbeitet ist.

15. Akkumulator mit in einen elektrolytbefüllbaren Behälter eingesetzten positiven und negativen Elektroden, welche aus beschichteten Bleigittern nach einem der Ansprüche 12 bis 14 aus einer Bleilegierung nach einem der Ansprüche 1 bis 11 gebildet sind.
